# EUROPÄISCHE PATENTSCHRIFT

(11) **EP 1 106 665 B1**
(45) Veröffentlichungstag und Bekanntmachung des Hinweises auf die Patenterteilung: **24.08.2011**
(21) Anmeldenummer: 00810954.8
(22) Anmeldetag: 17.10.2000
(51) Int. Cl.: C09K 3/10, C08J 9/00, C08L 75/04, C08L 33/02, C08L 33/26

(54) **Verwendung von quellbare Füllstoffe enthaltenden Kunststoffschäumen zur Abdichtung von Mauerdurchführungen**
Use of plastic foams containing swellable fillers for sealing wall ducts
Utilisation de mousses synthétiques contenant des charges gonflables pour l'étanchéification de traversées de murs

(30) Priorität: 19.11.1999 DE 19955839
(43) Veröffentlichungstag der Anmeldung: 13.06.2001
(73) Patentinhaber: HILTI Aktiengesellschaft, 9494 Schaan (LI)
(72) Erfinder: Kögler, Markus, 86807 Buchloe (DE); Heimpel, Franz, 86444 Affing (DE); Huber, Silvia, 86356 Neusäss (DE); Vogel, Peter, 86836 Untermeitingen (DE)
(74) Vertreter: Wildi, Roland

(56) Entgegenhaltungen:
- DE-A- 4 211 302

## Beschreibung

Die vorliegende Erfindung betrifft die Verwendung eines Kunststoffschaumsystems, das mindestens einen in Gegenwart von Wasser quellbaren Füllstoff enthält, zur Abdichtung von Öffnungen in Gebäuden, die mit dem Freien in Verbindung stehen, insbesondere von Hauseinführungen, bei denen Rohre oder Kabel durch Öffnungen in Wänden, Böden oder Decken vom Freien in das Innere des Gebäudes geführt werden.

In herkömmlicher Weise wird der Ringspalt zwischen Rohren, Kabeln oder dergleichen und Wänden, Böden oder Decken, durch welche die Rohre oder die Kabel durchgeführt werden, mit Hilfe sehr unterschiedlicher Methoden abgedichtet. Es handelt sich dabei um mechanische Abdichtungen, chemische Abdichtungen und Kombinationen davon.

Bei mechanischen Abdichtungen werden feste Dichtelemente in den Spalt eingeführt und bewirken eine Abdichtung durch formschlüssige Anpassung oder durch ein elastisches Verpressen mit dem Untergrund. Bei chemischen Abdichtungen wird die verbleibende Öffnung zwischen Rohr und/oder Kabel und Wand beziehungsweise Decke mit reaktiven Systemen ausgefüllt, die aushärten und die Öffnung verschließen. Hierzu können anorganische Systeme (beispielsweise Mörtel) oder organische Systeme, beispielsweise Dichtmassen, Polymermassen, Dichtschäume etc. verwendet werden. Bei kombinierten chemisch-/mechanischen Abdichtungen wird in der Regel zunächst eine mechanische Verschalung angebracht, in die ein chemisches Abdichtmaterial gemäß den oben beschriebenen Systemen eingebracht wird.

Diese herkömmlichen Methoden sind nicht vollständig befriedigend, da mechanische Lösungen teuer, zeit- und arbeitsaufwendig in der Installation und auf bestimmte Rohrdurchmesser, Kabeldicken und Bohrungsdurchmesser beschränkt sind. Die chemischen Abdichtungen, die durch Ausfüllen der verbliebenen Öffnungen mit Dichtmassen, Schäumen oder Mörteln wirken, besitzen diesen Nachteil nicht, gewährleisten aber jedoch im allgemeinen keine dauerhafte Abdichtung gegen eintretendes Wasser. Dies ist besonders problematisch im Fall von Mauer- und der Deckendurchführungen, die mit dem Freien in Verbindung stehen und der Witterung ausgesetzt sind. Dies liegt zum einen häufig an der Durchlässigkeit des Materials selbst (offenzellige Schäume) sowie an der mangelnden Haftung dieser chemischen Dichtungsmassen auf verschiedenen kritischen Untergründen, wie beispielsweise Kunststoffoberflächen der Rohre und/oder Kabel.

Aus der DE-A-197 48 631 ist bereits eine Dichtung zur Verhinderung des Aus- oder Eintritts von Flüssigkeiten aus oder in Systeme bekannt, welche in einem zwei Systeme voneinander trennenden Raum ein biologisch nicht abbaubares, durch Flüssigkeitsaufnahme quellfähiges Polymer oder mindestens zwei ein solches Polymer reaktiv bildende Komponenten aufweist. Namentlich liegt das Polymer pulverförmig in einem biologisch abbaubaren Schlauch, beispielsweise einem Papierschlauch vor oder es wird auf Fasern appliziert, so daß das entsprechend mit Polymer behaftete Gewebe, Gewirk oder Flies als Dichtung eingesetzt werden kann. Diese Dichtung wird vorzugsweise einer konventionellen Dichtung in einer Rohrmuffe nachgeschaltet oder liegt in Form einer Doppelfolie für die Versiegelung von Deponien vor, wobei das quellfähige Polymer zwischen die beiden Folien eingebracht ist. Bei dieser Dichtung handelt es sich um Ausführungsformen der oben angesprochenen chemisch/mechanischen Abdichtungen, welche bei der Installation wegen der erforderlichen Anpassung an die Dichtungsbereiche der Rohrmuffen beziehungsweise der Folien an den abzudichtenden Untergrund zeit- und arbeitsaufwendig sind und in der Regel in Form von passend geformten Dichtungsprodukten vorgehalten und eingebaut werden müssen.

Die EP-A-0 453 286 offenbart eine superabsorbierende Schaumzusammensetzung, die durch Umsetzung mindestens eines Polyols mit mindestens einem Polyisocyanat unter Schaumbildungsbedingungen in Gegenwart mindestens eines polymeren superabsorbierenden Materials hergestellt wird. Dabei dient die Anwesenheit des superabsorbierenden Materials dazu, das Absorbtionsvermögen des Schaums zu erhöhen. Allerdings beschreibt diese Druckschrift lediglich die Verwendung dieses superabsorbicrenden Materials als Wachstumsmedium für das Züchten von Pflanzen.

Die DE 42 11 302 A1 beschreibt ein in Wasser quellbares Dichtungsmaterial mit gummiähnlichen Eigenschaften, welches einen in Wasser stark quellfähigen Stoff als Quellkomponente enthält. Bei diesem Material handelt es sich um ein Halbzeug in Form von Folien und Bändern, aus denen die eigentlichen Dichtungen durch mechanische Bearbeitung, wie beispielsweise Schneiden, Stanzen oder dergleichen hergestellt werden können (Anspruch 11), oder aber um ein Fertigprodukt mit beliebiger Geometrie, welches durch bekannte Spritzgießverfahren beispielsweise in Reaktionsspritzgießmaschinen hergestellt werden kann. Diese Halbzeuge oder Fertigprodukte müssen, wenn sie für die Abdichtung von Ringspalten zwischen Rohren und/oder Kabeln und den entsprechenden Durchführungen eingesetzt werden sollen, in ihren Abmessungen genau an die Abmessung des Ringspalts angepasst werden.

Die Aufgabe der vorliegenden Erfindung besteht nun darin, die Probleme der oben angesprochenen herkömmlichen Abdichtungen für die Ringspalte zwischen Rohren und/oder Kabeln und den entsprechenden Durchführunggen durch Wände, Böden oder Decken von Gebäuden zu überwinden.

Diese Aufgabe wird erfindungsgemäß gelöst durch die Verwendung gemäß Anspruch 1. Die Unteransprüche betreffen bevorzugte Ausführungsformen dieses Erfindungsgegenstandes.

Gegenstand der Erfindung ist daher die Verwendung eines einen offenzelligen Schaum ergebenden Einkomponenten- oder Zweikomponenten-Polyurethan- und/oder Zweikomponenten-Epoxidharz-Schaumsystems, das mindestens ein wasserquellbares Homo- oder Co-Polymer auf der Grundlage von (Meth)acrylsäure, (Meth)acrylamid und/oder (Meth)acrylat als in Gegenwart von Wasser quellbaren Füllstoff in einer Menge von 1 bis 40 Gew.-% enthält, zur Abdichtung von Öffnungen in Gebäuden, die mit dem Freien in Verbindung stehen, insbesondere von Mauer- oder Deckendurchführungen, durch Aufschäumen der Bestandteile des Schaumsystems in der abzudichtenden Öffnung.

Als in Gegenwart von Wasser quellbaren Füllstoff verwendet man erfindungsgemäß vorzugsweise die im Handel unter der Bezeichnung "Cabloc" erhältlichen Polyacrylsäuren, welche vorzugsweise vernetzt sind und in teilweise neutralisierter Form, insbesondere in Form der Natriumsalze, namentlich der Teil-Natriumsalze, vorliegen. Besonders bevorzugte Produkte dieser Art sind die Produkte Cabloc CT, Cabloc CTF und Cabloc C96 der chemischen Fabrik Stockhausen GmbH, D-47805 Krefeld.

Der erfindungsgemäß eingesetzte, in Gegenwart von Wasser quellbare Füllstoff liegt in dem als Abdichtmaterial verwendeten Einkomponenten-oder Zweikomponenten-Polyurethan- und/oder Zweikomponenten-Epoxidharz-Schaumsystem vor. Die Einkomponenten-Polyurethanschäume liegen vorzugsweise in Form eines isocyanatgruppenhaltigen Vorpolymeren in einer Aerosolsprühdose vor, aus der die Bestandteile des Polyurethanschaums unter der Einwirkung des Treibgasdrucks des Treibmittels aus der (bzw. den) Aerosoldose(n) ausgetrieben werden. Die Zweikomponenten-Polyurethanschaumsysteme oder Zweikomponenten-Epoxidschaumsysteme liegen vorzugsweise in Kartuschen vor, wobei die Binderkomponente und die Härterkomponente in unterschiedlichen Kartuschen vorliegen, welche Bestandteile zusammen mit den übrigen Bestandteilen unter Druck, sei es durch ein Treibmittel, im Fall der Aerosoldosen-Schäume, oder durch mechanisches Auspressen ausgepresst und in einem Statikmischer vermischt werden, wonach die Mischung in die abzudichtende Öffnung eingeführt wird und dort aufschäumt und/oder aushärtet. Erfindungsgemäß können auch Silikonschaumsysteme mit den quellfähigen Polymeren ausgerüstet und für die beanspruchte Anwendung eingesetzt werden.

Dabei zeigen die offenzelligen Kunststoffschäume , dass sie entgegen ihrer zu erwartenden größeren Porosität gegenüber geschlossenzelligen Schäumen eine wesentlich bessere Abdichtung der nie ganz zu vermeidenden Ringspalte im Kontaktbereich zwischen Kunststoffschaum und der Oberfläche von Mauer, Boden oder Decke beziehungsweise durch die Öffnung hindurch geführten und abzudichtenden Rohre, Kabel, Leitungen etc. ermöglichen, namentlich dann, wenn diese hindurchgeführten Einrichtungen Kunststoffoberflächen aus beispielsweise Polyethylen, Polypropylen oder dergleichen aufweisen, welche im Normalfall nur eine schlechte Haftung an den in Rede stehenden Kunststoffschäumen zeigen.

Das erfindungsgemäß verwendete Kunststoffschaumsystem enthält den in Gegenwart von Wasser quellbaren Füllstoff in einer Menge von 1 bis 40 Gew.-%, vorzugsweise 5 bis 30 Gew.-%, noch bevorzugter in einer Menge von 10 bis 20 Gew.-%, bezogen auf das Gewicht der gesamten Bestandteile des Kunststoffschaumsystems.

Bei Durchführung der vorliegenden Erfindung werden die Bestandteile des Kunststoffschaumsystems, welche den in Gegenwart von Wasser quellbaren Füllstoff enthalten, in üblicher Weise ausgebracht, das heißt die Maueröffnung wird mit Hilfe eines Schaumdispensers oder in anderer Weise mit dem Schaumsystem vor Ort ausgeschäumt. Der aufgeschäumte und ausgehärtete Schaum füllt dabei die ganze Öffnung aus, wobei aufgrund des Aufschäumens des Kunststoffschaumsystems bereits ein gewisser Anpreßdruck der Schaummasse auf die abzudichtenden Oberflächen ausgeübt wird. Bei einem Kontakt von Wasser, beispielsweise durch Hinzutreten von Umgebungsfeuchtigkeit ergibt sich durch das Aufquellen des wasserquellbaren Füllstoffs eine überraschend starke Volumenvergrößerung im Kontaktbereich, wodurch ein weiterer Zutritt der Feuchtigkeit in die Zellstruktur des Schaumes ebenso verhindert wird, wie ein Hindurchtreten der Feuchtigkeit durch den Ringspalt zwischen den Kontaktoberflächen des Kunststoffschaumes mit den Oberflächen der Rohre oder Kabel beziehungsweise des Mauerwerks, weil auch in diesen Fällen durch Abquetschen des Mikrospalts zur Rohr-/Kabel-Oberfläche, der aufgrund der Nicht-Haftung des Schaummaterials entstehen kann, ein Wasserdurchtritt verhindert wird. Dies ist als überraschend anzusehen, weil namentlich aufgrund der Offenbarung der EP-A-0 453 286 in keiner Weise erwartet werden konnte, daß sich die offenen Poren des Schaumes bei Anwendung der erfindungsgemäß eingesetzten Mengen des wasserquellbaren Füllstoffes soweit verschließen lassen, daß ein weiterer Feuchtigkeitseintritt sicher verhindert wird. Gegenüber den aus der DE-A 197 48 631 bekannten Dichtungen ergibt sich der für den Anwendungszweck besonders hoch geschätzte Vorteil, daß im Gegensatz zu der Lehre dieses Standes der Technik es nicht notwendig ist, den quellstoffhaltigen Gewebeschlauch durch Hinterfütterung oder Fixierringe in Position zu halten um dadurch die angestrebte Dichtungswirkung zu erreichen, da erfindungsgemäß die Funktion der Fixierung ohne zusätzliche Maßnahmen direkt von dem erfindungsgemäß eingesetzten Kunststoffschaumsystem übernommen wird. Dabei muß es zweifellos als für den Fachmann unerwartet angesehen werden, daß es bei Einarbeitung des quellfähigen Polymeren als Füllstoff unmittelbar in die Matrix des Kunststoffschaums dennoch zu der angestrebten Dichtungswirkung kommt und dies namentlich bei offenporigen Schäumen. Damit führt die beanspruchte Verwendung aber zu einem unerwarteten und besonders vorteilhaften technischen Effekt.

Die erfindungsgemäße Lehre verbindet die Vorteile von konventionellen Konstruktionsschaumsystemen (einfache und schnelle Anwendung, Universalität bezüglich der zu verschließenden Öffnungsgeometrie, geringer Preis) mit der Forderung nach einer zuverlässigen, dauerhaften Abdichtung selbst bei Untergründen, auf denen normalerweise keine Haftung erzielt werden kann.

Die folgenden Beispiele dienen der weiteren Erläuterung der Erfindung.

### Beispiel 1

### Zwei-Komponenten-Polyurethan-Kartuschenschaum

Die beiden Komponenten A und B dieses Zwei-Komponenten-Polyurethanschaums enthalten die folgenden Bestandteile:

### Komponente A:

| | |
|---|---|
| 49,0 | Gewichtsteile eines bromlerten Polyetherpolyols mit |
| | einer OH-Zahl von 580 und einer Funktionalität von 3,5 |
| 40,7 | Gewichtsteile eines verzweigten Polyetherpolyols mit einer OH-Zahl von 42 mit einer Funktionalität von 3 |
| 0,3 | Gewichtsteile Diazabicyclooctan |
| 1,0 | Gewichtsteile Pentamethyldiethylentriamin |
| 3,0 | Gewichststeile Wasser |
| 2,5 | Gewichtsteile hochdisperse Kieselsäure |
| 3,5 | Gewichtsteile eines Silikon-Glykol-Copolymers |
| 10 | Gewichtsteile quellfähiges Polymer (Cabloc CT) |

### Komponente B:

100 Gewichtsteile Diphenylmethandiisocyanat (Roh-MDI)
10 Gewichtsteile quellfähiges Polymer (Carbloc CT).

Die beiden Komponenten des polymeren Schaumsystems liegen getrennt in einer Doppelkammer-Kartusche vor und werden vom Verarbeiter über einen Statikmischer, in dem die Komponenten im Mischungsverhältnis 1:1 vermischt werden, ausgetragen und in der Wanddurchführung aufgeschäumt.

### Beispiel 2

### Zwei-Komponenten-Polyurethan-Aerosoldosenschaum

Die beiden Komponenten A und B dieses Aerosoldosenschaums besitzen folgende Zusammensetzung:

### Komponente A:

| | |
|---|---|
| 91,7g | eines Polyethylenglykoldiadipats mit einer Hydroxylzahl von 56, |
| 33,4g | eines mit Glyzerin gestarteten Polyoxypropylenpolyols mit einer Hydroxylzahl von 400, |
| 30,6g | eines mit Glyzerin gestarteten Polyoxypropylenpolyols mit einer Hydroxylzahl von 42, |
| 19,5 g | eines Polyethylenglykols mit einem Molekulargewicht von 600, |
| 8.3g | eines Polyoxyalkylenglykolpolysiloxancopolymers als Schaumstabilisator, |
| 2.8g | Di-(2-morpholinoethyl)-ether, |
| 91.7g | Trichlorpropylphosphat, |
| 403.1g | Diphenylmethandiisocyanat (Roh-MDI), |
| 73.7g | Tetrafluorethan, |
| 40.3g | Dimethylether, |
| 20.9g | Butan, |
| 4.2g | Propan |
| 156.0g | quellfähiges Polymer (Cabloc CT) |

### Komponente B:

20g Monoethylenglykol.

Die Komponente A wird in einen Aerosolsprühbehälter eingebracht. Die zweite Komponente B - die gegebenenfalls ein Treibmittel, wie Dimethylether enthalten kann - wird in einer separaten Kammer angeordnet, die sich als Innenbehälter in der Haupt-Aerosoldose befinden kann oder auch in elner getrennten zweiten Dose.

Bei der Anwendung erfolgt das Vermischen der beiden Komponenten in der Weise, daß der Inhalt des Behälters mit der Komponente B (Vernetzer) in den Hauptbehälter, der die Komponente A enthält, entleert wird, worauf der Inhalt durch Schütteln homogenisiert wird. Man kann aber auch ein Zwei-Komponenten-Dosiergerät verwenden, auf welches beide Behälter für die Komponente A beziehungsweise Komponente B aufgesetzt werden, worauf das Vermischen in einem Dispenser erfolgt.

Der Vernetzer der Komponente B ist derart ausgelegt, daß die enthaltenen Hydroxylgruppen mengenmäßig derart auf die in den Prepolymer der Komponente A vorhandenen Isocyanatgruppen abgestimmt sind, daß auf die Umgebungsfeuchtigkeit als Vernetzungskomponente verzichtet werden kann.

Gemäß einer weiteren Ausführungsform enthält die Komponente B ebenfalls ein Treibmittel, wie Tetrafluroroethan, Dimethylether, Butan und/oder Propan.

### Beispiel 3

### Ein-Komponenten-Polyurethan-Aerosoldosenschaum

In diesem Fall liegt die einzige Komponente in einer einzigen Aerosolsprühdose vor und umfaßt folgende Bestandteile:

| | |
|---|---|
| 91,7g | eines Polyethylenglykoldiadipats mit einer Hydroxyzahl von 56, |
| 33,4g | eines mit Glyzerin gestarteten Polyoxypropylenpolyols mit einer Hxdroxylzahl von 400, |
| 30,6g | eines mit Glyzerin gestarteten Polyoxypropylepolyols mit einer Hydroxylzahl von 42, |
| 19,5g | eines Polyethylenglykols mit einem Molekular gewicht von 600, |
| 8,3g | eines Polyoxyalkylenglykolpolysiloxancopolymers als Schaumstabilisator, |
| 2,8g | Di-(2-morpholinoethyl)-ether, |
| 91,7g | Trichlorpropylphosphat, |
| 403,1g | Diphenylmethandiisocyanat (Roh-MDI), |
| 73,7g | Tetrafluorethan, |
| 40,3g | Dimethylether, |
| 20,9g | Butan, |
| 4,2g | Propan |
| 156,0g | quellfähiges Polymer (Cabloc CT) |

Die Verarbeitung erfolgt aus der Ein-Komponenten-Aerosoldose durch heftiges Schütteln und Ausbringen der Schaumbestandteile in die abzudichtende Öffnung.

### Beispiel 4

### Zwei-Komponenten-Epoxidharz-Kartuschenschaum

Die Bestandteile der Komponente A und B dieses Zwei-Komponenten-Epoxidharzschaums sind die folgenden:

### Komponente A:

| | |
|---|---|
| 100g | eines Bisphenol A-Epichlorhydrin-Harzes mit einem Epoxid- äquivalent von 185 |
| 10g | Polydimethylmethylhydrogensiloxan |
| 10g | quellfähiges Polymer (Cabloc CT) |
| 5g | hochdisperse Kieselsäure (StO₂) |

### Komponente B:

| | |
|---|---|
| 19g | m-Xylylendiamin (Aminäquivalent 34) |
| 10g | quellfähiges Polymer (Cabloc CT) |
| 1g | hochdisperse Kieselsäure (SiO₂) |

Die beiden Komponenten A und B liegen in den getrennten Behältern einer Doppelkammer-Kartusche vor und werden bei der Anwendung über einen Statikmischer ausgetragen, in dem die Komponenten in dem Mischungsverhältnis 1:1 vermischt und zur Reaktion gebracht werden.

### Beispiel 5

### Vergleichsversuche:

Die in den obigen Beispielen 1 bis 4 angegebenen Schaumsystemen wirden jeweils in einen Ringspalt mit einem äußeren Durchmesser von 100mm (Rohr aus Polymethylmethacrylat) und einem inneren Durchmesser von 40mm (Rohr aus Polyethylen) in einer Tiefe von etwa 10cm eingebracht, aufgeschäumt und während 24 Stunden ausgehärtet. Danach wurde der Schaum von einer Seite mit Wasser mit einem Druck von 0,5 bar beaufschlagt und es wurde die Dichtheit der Durchführung geprüft. Zum Vergleich wurden die gleichen Schaumsysteme, allerdings ohne quellfähiges Polymer, hergestellt und in gleicher Weise angewandt.

Während die erfindungsgemäß unter Verwendung des quellfähigen Polymers eingesetzten Schäume einwandfrei dicht hielten, waren sämtliche nicht mit dem in Gegenwart von Wasser quellbaren Füllstoff ausgerüsteten Schaumsysteme undicht.

## Patentansprüche

1. Verwendung eines einen offenzelligen Schaum ergebenden Einkomponenten- oder Zweikomponenten-Polyurethan- und/oder Zweikomponenten-Epoxidharz-Schaumsystems das mindestens ein wasserquellbares Homo- oder Co-Polymer auf der Grundlage von (Meth)acrylsäure, (Meth)acrylamid und/oder (Meth)acrylat als in Gegenwart von Wasser quellbaren Füllstoff in einer Menge von 1 bis 40 Gew.-% enthält, zur Abdichtung von Öffnungen in Gebäuden, die mit dem Freien in Verbindung stehen, insbesondere von Mauer- oder Deckendurchführungen, durch Aufschäumen der Bestandteile des Schaumsystems in der abzudichtenden Öffnung.

2. Verwendung nach einem der vorhergehenden Ansprüche, **dadurch gekennzeichnet, daß** das Schaumsystem als wasserquellbares Homo- oder Co-Polymer vernetzte Polyacrylsäure enthält.

3. Verwendung nach Anspruch 2, **dadurch gekennzeichnet, daß** die vernetzte Polyacrylsäure des wasserquellbaren Homo- oder Co-Polymers in teilweise neutralisierter Form vorliegt.

4. Verwendung nach Anspruch 3, **dadurch gekennzeichnet, daß** die vernetzte Polyacrylsäure des wasserquellbaren Homo- oder Co-Polymers in Form des Teil-Natriumsalzes vorliegt.

5. Verwendung nach mindestens einem der vorhergehenden Ansprüche, **dadurch gekennzeichnet, daß** der in Gegenwart von Wasser quellbare Füllstoff in einer Menge von 10 bis 20 Gew.-% in dem Schaumsystem enthalten ist.

## Claims

1. Use of a single component or two component polyurethane and/or two component epoxy resin foam system producing an open cell foam, which contains at least one water swellable homopolymer or copolymer based on (meth)acrylic acid, (meth)acrylic amide and/or (meth)acrylate as a filler, which is swellable in the presence of water, in a quantity of 1 to 40% by weight, to seal openings in buildings in contact with the open air, particularly wall or ceiling ducts, by frothing the components of the foam system in the opening to be sealed.

2. Use according to one of the previous claims, **characterised in that** the foam system contains cross-linked polyacrylic acid as a water swellable homopolymer or copolymer.

3. Use according to claim 2, **characterised in that** the cross-linked polyacrylic acid of the water swellable homopolymer or copolymer is present in a partly neutralised form.

4. Use according to claim 3, **characterised in that** the cross-linked polyacrylic acid of the water swellable homopolymer or copolymer is present in the form of the partial sodium salt.

5. Use according to at least one of the previous claims, **characterised in that** the filler, which is swellable in the presence of water, is contained in the foam system in a quantity of 10 to 20% by weight.

## Revendications

1. Utilisation d'un système de mousse de polyuréthanne à un composant ou deux composants et/ou de résine époxyde à deux composants produisant une mousse à alvéoles ouvertes, lequel système de mousse contient au moins un homopolymère ou un copolymère à base d'acide (méth)acrylique, de (méth)acrylamide et/ou de (méth)acrylate gonflable dans l'eau et se présente sous forme de charge pouvant gonfler en présence d'eau dans une quantité de 1 à 40 % en poids, pour étanchéifier des ouvertures dans des bâtiments qui communiquent avec l'air libre, en particulier des traversées de mur ou de plafond, en amenant à l'état de mousse les composants du système de mousse dans l'ouverture à étanchéifier.

2. Utilisation selon l'une quelconque des revendications précédentes, **caractérisée en ce que** le système de mousse contient un acide polyacrylique réticulé sous forme d'homopolymère ou de copolymère gonflables dans l'eau.

3. Utilisation selon la revendication 2, **caractérisée en ce que** l'acide polyacrylique réticulé de l'homopolymère ou du copolymère gonflable dans l'eau est présent sous forme partiellement neutralisée.

4. Utilisation selon la revendication 3, **caractérisée en ce que** l'acide polyacrylique réticulé de l'homopolymère ou du copolymère gonflable dans l'eau est présent sous forme de sel de sodium partiel.

5. Utilisation selon au moins une quelconque des revendications précédentes, **caractérisée en ce que** la charge gonflable en présence d'eau est contenue dans une quantité de 10 à 20 % en poids dans le système de mousse.
